# FASCICULE DE BREVET EUROPEEN

(11) **EP 1 502 081 B1**
(45) Date de publication et mention de la délivrance du brevet: **14.09.2016**
(21) Numéro de dépôt: 03738215.7
(22) Date de dépôt: 31.03.2003
(51) Int. Cl.: G01D 5/14

(54) **DISPOSITIF DE CAPTEUR MAGNETIQUE DE POSITION ANGULAIRE**
MAGNETISCHER WINKELPOSITIONSGEBER
ANGULAR POSITION MAGNETIC SENSOR DEVICE

(30) Priorité: 09.04.2002 FR 0204413
(43) Date de publication de la demande: 02.02.2005
(73) Titulaire: MMT S.A., 6304 Zug (CH)
(72) Inventeur: GANDEL, Pierre, F-25660 Montfaucon (FR); PRUDHAM, Daniel, F-25220 Thise (FR); FRACHON, Didier, F-25000 Besançon (FR); CAVALLIER, Bruno, F-25410 Saint-Vit (FR)
(74) Mandataire: IP Trust
(86) Numéro de dépôt international: PCT/FR2003/000997
(87) Numéro de publication internationale: WO 2003/085361

(56) Documents cités:
- WO-A-01/20250
- DE-A- 10 139 154
- US-A- 5 861 745

## Description

La présente invention concerne un dispositif de capteur magnétique de position angulaire. Elle s'applique en particulier, mais non exclusivement, aux vannes papillon motorisées (ETC) nécessitant un signal très stable en début de course et une course assez élevée (supérieure à 90°) avec une excellente linéarité.

D'une manière générale, les systèmes sans contact consistent essentiellement en des dispositifs réalisés à partir de capteurs magnétiques de position angulaire. Dans tous ces dispositifs, le signal mesuré doit être le plus linéaire possible en fonction de la position angulaire.

Afin de rendre plus compréhensibles à la fois l'invention et les dispositifs de capteurs magnétiques de position angulaire, il est important de comprendre la notion de "zéro Gauss".

La position délivrant un signal égal à zéro Gauss correspond au point de haute stabilité. En effet, la variation d'induction est mesurée grâce à une sonde à effet Hall, intelligente et programmable, de type ASIC. Cette sonde permet de compenser l'effet de la température (programmation d'un coefficient thermique) sur le système magnétique. La compensation thermique n'est pas parfaite et donc la seule position pour laquelle cette erreur n'a pas d'influence est une position pour laquelle l'induction est nulle.

Les demandes de brevet N° FR 2670286 et N° EP 0665416, déposées au nom de la demanderesse, divulguent un dispositif dans lequel la fonction de mesure de la position angulaire est réalisée par une variation de l'induction magnétique, mais présentent une course maximale de ±90° autour de la position zéro Gauss. Or, pour les capteurs du type présentés dans les deux demandes de brevets susvisées, lorsque l'on cherche à obtenir une excellente linéarité (typiquement ±0.5%), cette course est réduite à ±70° autour de la position zéro Gauss. Les applications ETC nécessitant généralement une course totale voisine de 90°, deux possibilités sont possibles :
- utiliser une plage angulaire symétrique, par exemple [-45°;+45°], ou
- utiliser la plage angulaire [-20°;+70°] de façon à se rapprocher du zéro Gauss.

Ainsi, dans tous les cas, il n'est pas possible de réunir les trois caractéristiques suivantes :
- un point de départ à zéro Gauss (point de haute stabilité),
- une course angulaire utile supérieure ou égale à 90°,
- une excellente linéarité sur la plage angulaire choisie (±0,5%).

En effet, en utilisant par exemple l'intervalle [-20°;+70°], le point de départ (-20°) ne travaille pas à zéro Gauss, mais présente un "offset" gênant pour des applications qui nécessitent un point de départ très stable.

On connaît également dans l'art antérieur, le brevet américain N° US 5861745 qui décrit un dispositif de détection sans contact constitué par un rotor et par un stator. Dans le stator est agencé un élément de Hall dans un entrefer en forme de fente et dans la paroi intérieure du rotor sont agencés deux aimants annulaires qui présentent des polarités magnétiques opposées l'une à l'autre.

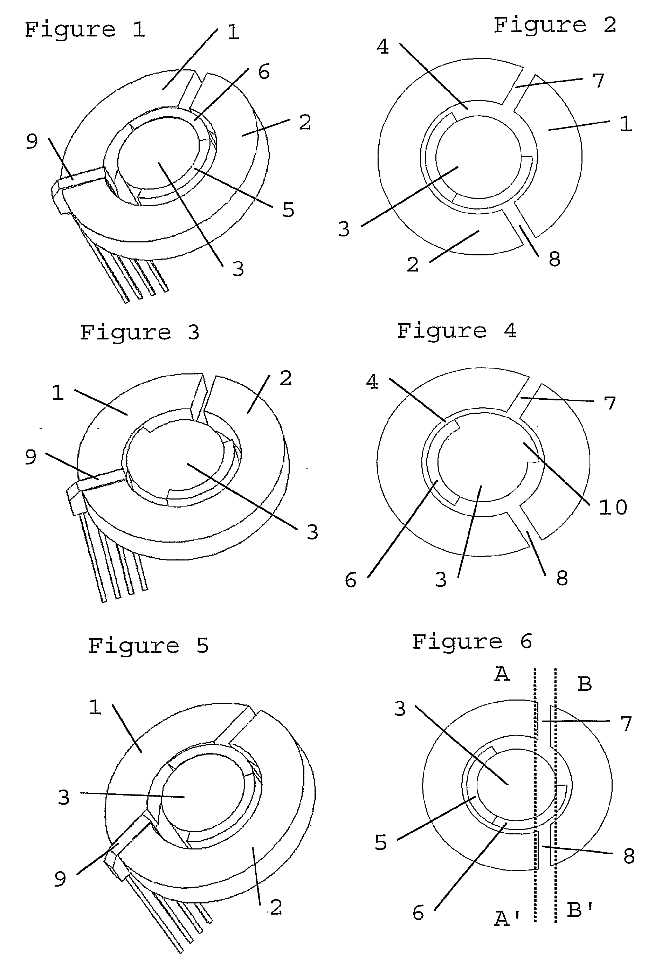

Mais dans le cadre d'une utilisation du capteur angulaire sur la course maximale (240°) et/ou pour des applications du type ETC, seules deux structures fonctionnent théoriquement, celles représentées sur les figures 3 et 4, qui consistent respectivement en une configuration stator intérieur et en une configuration stator extérieur. Ces deux dispositifs présentent les caractéristiques suivantes : trois pièces pour le stator et deux aimants aimantés radialement, l'un sur une étendue angulaire de 120° (radial intérieur) et l'autre sur une étendue angulaire de 240° (radial extérieur).

Toutefois, il n'est pas à l'heure actuelle techniquement faisable d'aimanter de façon correcte un aimant sur une étendue angulaire de 240°. Cette dégradation des performances conduit inévitablement à une mauvaise linéarité, or la linéarité est le premier critère de ce type de capteurs.

Enfin, on connaît également la demande de brevet international N° WO 0120250 qui décrit un dispositif de mesure pour la détection sans contact d'un mouvement relatif comportant 3 pôles statoriques d'environ 120° de par la réalisation d'un trou dans le grand stator qui a pour objectif de diminuer le flux de fuite lorsque la transition des aimants se trouve dans la configuration représentée notamment sur les figures 22, 23, 24a et 24c de ladite demande. Ainsi, le dispositif de cette demande de brevet ne permet pas de travailler dans la phase angulaire [-120°;+120°] car la présence du susdit trou induit un "accident" sur l'induction mesurée pour la zone proche de zéro.

Le brevet allemand DE 10139154 décrit un dispositif de détection sans contact constitué par un rotor et un stator, le rotor comprenant deux concentrateurs de flux de largeurs angulaires d'environ 120°.

10 L'invention a donc plus particulièrement pour but de remédier aux inconvénients des dispositifs de l'art antérieur. Elle propose à cet effet un dispositif de capteur magnétique de position angulaire, comportant au moins un stator et un rotor, l'espace entre ledit stator et ledit rotor définissant sur sensiblement 360° un entrefer principal dans lequel se déplace au moins deux pôles magnétiques de polarités alternées, ledit stator comportant au moins un entrefer secondaire dans lequel est placé au moins un élément magnétosensible, caractérisé en ce que ledit stator est constitué de deux épanouissements polaires de largeurs angulaires respectivement sensiblement égales à 120° et 240°.

Par ailleurs, les deux pôles magnétiques seront chacun de largeur angulaire sensiblement égale à 120°. Avantageusement, les susdits deux pôles magnétiques seront des aimants adjacents aimantés radialement.

Dans un mode d'exécution de l'invention, le rotor est situé à l'intérieur du stator.

Dans un second mode d'exécution, le rotor est situé à l'extérieur du stator.

Selon une possibilité offerte par l'invention, les bords d'un au moins du susdit entrefer pourront être orientés radialement, également dénommés "en fentes radiales", ou être orientés dans la même direction, également dénommés "en fentes droites".

De préférence, les bords du susdit entrefer seront parallèles entre eux. De la même manière, l'un au moins desdits pôles magnétiques sera avantageusement constitué en un matériau ferromagnétique doux.

L'un au moins des pôles magnétiques pourra être collé au rotor ou être partie intégrante dudit rotor.

Selon une possibilité, le rotor et le stator seront disposés axialement, c'est-à-dire suivant un même axe linéaire. Dans ce cas, les susdits pôles magnétiques seront alors des aimants adjacents de forme discale aimantés axialement, c'est-à-dire suivant un même axe linéaire.

Le rotor pourra également comprendre au moins deux parties séparées axialement ; les deux parties formant le rotor étant alors séparées par un aimant à disque, à aimantation axiale. Les deux parties pourront également être séparées par un aimant de forme annulaire, à aimantation axiale.

Selon une possibilité offerte par l'invention, le rotor pourra comprendre au moins deux parties séparées transversalement ; les deux parties formant le rotor étant alors séparées par un aimant parallélépipédique, à aimantation transversale.

Dans le cas où le rotor est situé à l'extérieur du stator, le rotor pourra comprendre au moins deux parties séparées transversalement par un aimant, à aimantation transversale ; l'aimant pouvant présenter une forme parallélépipédique.

Grâce à ces particularités, l'invention permet donc de fabriquer, à faible coût, un capteur de position angulaire apte à travailler avec une linéarité de ±0.5% sur une course de 100° à partir du point zéro Gauss et étend la course de ±90° à ±120°. Ainsi, ce capteur présente les caractéristiques suivantes :
- une linéarité de l'ordre de 1% crête à crête,
- la délivrance d'un signal ayant une bonne linéarité sur une plage de 220°,
- une partie statorique réduite à deux pièces,
- deux pôles magnétiques aimantés préférentiellement radialement sur une plage angulaire sensiblement égale à 120°, plus facile à mettre en oeuvre industriellement.

Des modes d'exécution de l'invention seront décrits ci-après, à titre d'exemple non limitatif, avec référence aux dessins annexés dans lesquels :
- la figure 1 illustre une vue en perspective d'un dispositif de capteur magnétique de position angulaire selon l'invention ;
- la figure 2 est une vue en plan de dessus du dispositif représenté sur la figure 1 ;
- les figures 3 et 4 illustrent respectivement une vue en perspective et une vue en plan de dessus d'un autre mode d'exécution du dispositif selon l'invention dans lequel le rotor est placé à l'intérieur du stator ;
- les figures 5 et 6 illustrent respectivement une vue en perspective et une vue en plan de dessus d'une variante du dispositif représenté sur les figures 3 et 4 ;
- les figures 7 et 8 illustrent respectivement une vue en perspective et une vue en plan de dessus d'un autre mode d'exécution du dispositif selon l'invention dans lequel le rotor est placé à l'extérieur du stator ;
- les figures 9 et 10 illustrent respectivement une vue en perspective et une vue en plan de dessus d'un autre mode d'exécution du dispositif selon l'invention dans lequel les pôles magnétiques sont du type disque ;
- les figures 11 et 12 illustrent respectivement une vue en perspective et une vue en plan de dessus d'un autre mode d'exécution du dispositif selon l'invention dans lequel les pôles magnétiques sont indépendants du rotor ;
- les figures 13 et 14 illustrent respectivement une vue en perspective et une vue en plan de dessus d'un autre mode d'exécution du dispositif selon l'invention dans lequel le rotor est séparé axialement par un aimant disque à aimantation axiale ;
- la figure 15 illustre une vue en perspective d'un dispositif selon l'invention dans lequel le rotor est séparé transversalement par un aimant à aimantation transversale ;
- les figures 16 et 17 illustrent respectivement une vue en perspective et une vue en plan de dessus d'un autre mode d'exécution du dispositif selon l'invention dans lequel le rotor est disposé à l'extérieur du stator et est séparé axialement par un aimant annulaire à aimantation axiale ;
- la figure 18 illustre une vue en perspective d'un dispositif selon l'invention dans lequel le rotor, disposé à l'extérieur du stator, est séparé transversalement par un aimant à aimantation transversale.

Le dispositif de capteur magnétique de position angulaire selon l'invention comprend, dans tous les exemples présentés ci-après nécessaires à la compréhension et à l'illustration des différentes variantes de l'invention, un stator et un rotor en matériau ferromagnétique doux ainsi que deux pôles magnétiques de polarités alternées. Un élément magnétosensible, par exemple une sonde de Hall, logée dans un entrefer secondaire du stator mesure l'induction et permet d'obtenir la position angulaire du rotor par rapport au stator.

Par ailleurs, comme cela est visible sur les différentes figures, que le stator soit placé à l'extérieur ou à l'intérieur du rotor, celui-ci est toujours constitué par deux épanouissements polaires 1, 2 de largeurs angulaires respectivement sensiblement égales à 120° et 240°.

Dans un mode de réalisation représenté sur les figures 1 et 2, le dispositif de capteur de position selon l'invention comporte un stator 1, 2 à l'intérieur duquel est logé un rotor 3. L'espace défini entre le stator 1, 2 et le rotor 3 définit l'entrefer principal 4 qui s'étend sur 360° et dans lequel se déplacent deux pôles magnétiques 5 et 6, ou aimants, adjacents aimantés radialement et de polarités alternées, lesdits aimants, solidaires d'un moyen d'accouplement, pouvant être collés au rotor.

Le stator 1, 2 est constitué par deux parties fixes 1 et 2, définissant deux entrefers secondaires 7 et 8 dont les bords, deux à deux parallèles entre eux, sont orientés radialement. Les deux entrefers secondaires 7 et 8 sont sensiblement perpendiculaires à l'entrefer principal 4 et l'élément magnétosensible 9, logé dans au moins un desdits entrefers secondaires 7, 8, mesure la variation de l'induction. Cet élément magnétosensible 9 engendre un signal électrique proportionnel à l'induction qui le traverse.

Les figures 3 et 4 représentent une variante du dispositif de capteur magnétique de position angulaire représentée sur les figures 1 et 2. En effet, dans cette variante, un des aimants définissant un des deux pôles magnétiques de largeur angulaire sensiblement égale à 120° est remplacé par un matériau ferromagnétique doux. Par ailleurs, de la même manière que précédemment, le rotor 3 est disposé à l'intérieur du stator 1, 2 et les bords parallèles des entrefers secondaires 7, 8 sont orientés radialement, selon une configuration connue dénommée "en fentes radiales".

Selon une possibilité offerte par l'invention, les pôles magnétiques peuvent être collés au rotor 3 ou faire partie intégrante du rotor 3. Dans l'exemple représenté sur la figure 4, le pôle magnétique 10 constitué par le matériau ferromagnétique doux est ainsi partie intégrante du rotor 3.

De la même manière, on pourra envisager une réalisation du dispositif selon l'invention, représenté sur les figures 5 et 6, dans laquelle les entrefers secondaires 7 et 8, dont on a vu précédemment que les bords sont idéalement parallèles, sont orientés dans la même direction, c'est-à-dire que lesdits bords s'étendent selon respectivement deux lignes droites parallèles, A'A et B'B visibles sur la figure 6.

Bien entendu, on pourra également concevoir le cas où les bords des entrefers secondaires ne sont pas parallèles sans une altération significative des propriétés du dispositif selon l'invention. De plus, pour des considérations de réalisation et de production, on comprendra qu'il est plus facile de prévoir que les bords opposés des pôles magnétiques 5, 6 ou 6, 10 sont parallèles.

Dans un second mode d'exécution du dispositif selon l'invention, le capteur de position comporte un rotor 11 à l'intérieur duquel est logé un stator 12, 13.

De la même manière que précédemment, l'espace entre ledit stator 12, 13 et ledit rotor 11 définit l'entrefer principal 4 qui s'étend sur 360° et dans lequel se déplacent deux aimants adjacents 5, 6 aimantés radialement et de polarités alternées. De façon équivalente, lesdits aimants 5 et 6, solidaires d'un moyen d'accouplement, peuvent être collés au rotor 11 ou être partie intégrante de ce dernier. Les deux aimants 5, 6 constituent deux pôles magnétiques de largeur angulaire sensiblement égale à 120°.

Le stator 12, 13 est ici constitué par deux parties fixes 12 et 13, dont l'espace les séparant définit un entrefer secondaire 14 et dont les deux extrémités sont sensiblement perpendiculaires à l'entrefer principal 4. L'élément magnétosensible 9, logé dans l'entrefer secondaire 14, mesure la variation de l'induction. Cet élément magnétosensible 9 engendre un signal électrique proportionnel à l'induction qui le traverse.

Comme précédemment, on pourra envisager que l'un au moins des pôles magnétiques 5 ou 6 de largeur sensiblement égale à 120° est remplacé par un matériau ferromagnétique doux.

Dans un mode d'exécution du dispositif selon l'invention, le stator 1, 2 et le rotor 15 sont disposés axialement. L'espace de séparation entre le stator 1, 2 et le rotor 15 définit l'entrefer principal 4 qui s'étend sur 360° et dans lequel se déplacent deux aimants 5 et 6, constituant deux pôles magnétiques, de largeur angulaire sensiblement égale à 120°, de forme discale, adjacents aimantés axialement et de polarités alternées, lesdits aimants 5 et 6, solidaires d'un moyen d'accouplement, pouvant être collés au rotor 15.

Comme précédemment, dans ce mode d'exécution, le dispositif selon l'invention fonctionne de la même manière. Ainsi, le stator est constitué par deux parties fixes 1 et 2, définissant deux entrefers secondaires 7, 8, dont les bords parallèles sont orientés radialement. Les deux entrefers secondaires 7, 8, sont sensiblement perpendiculaires à l'entrefer principal 4 et l'élément magnétosensible 9, logé dans au moins un desdits entrefers secondaires 7 ou 8, mesure la variation de l'induction. Cet élément magnétosensible 9 engendre un signal électrique proportionnel à l'induction qui le traverse.

Cette variante du dispositif selon l'invention pourra présenter, comme toutes les alternatives du dispositif selon l'invention, au moins un des susdits pôles magnétiques 5, 6, qui sera constitué par un matériau ferromagnétique doux. De la même manière, les bords opposés et parallèles des entrefers secondaires 7, 8, pourront être orientés dans la même direction.

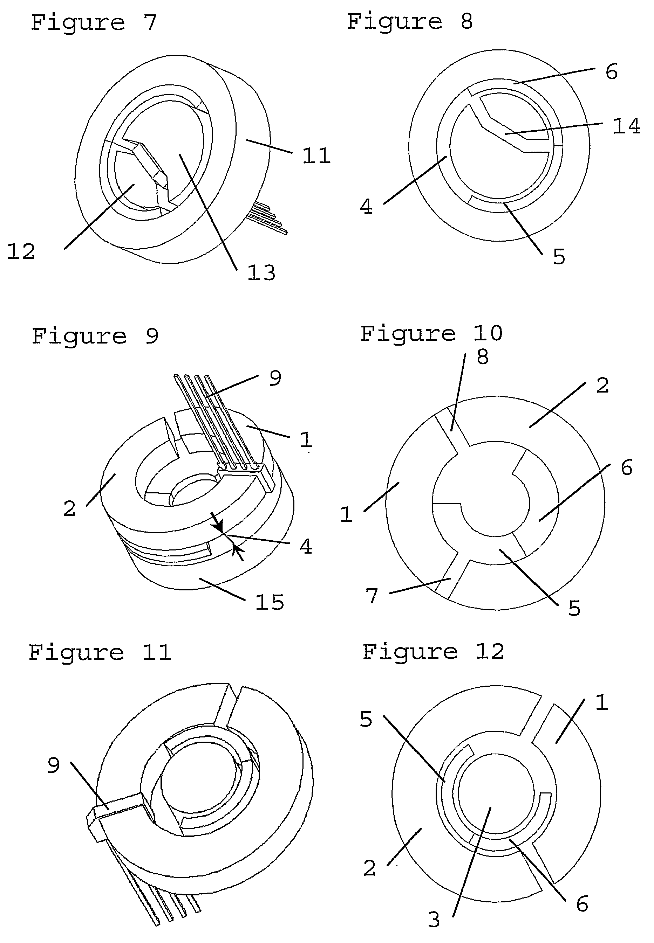

Selon une autre possibilité offerte par l'invention et représentée sur les figures 11 et 12, le dispositif de capteur magnétique de position angulaire pourra, dans tous les exemples choisis pour illustrer ladite invention, présenter ces deux pôles magnétiques 5, 6 indépendant à la fois du rotor 3 et du stator 1, 2. Ainsi, les deux susdits pôles 5, 6, ne seront ni collés au stator ni collés au rotor et pourront se déplacer, de façon indépendante, à l'intérieur de l'entrefer principal.

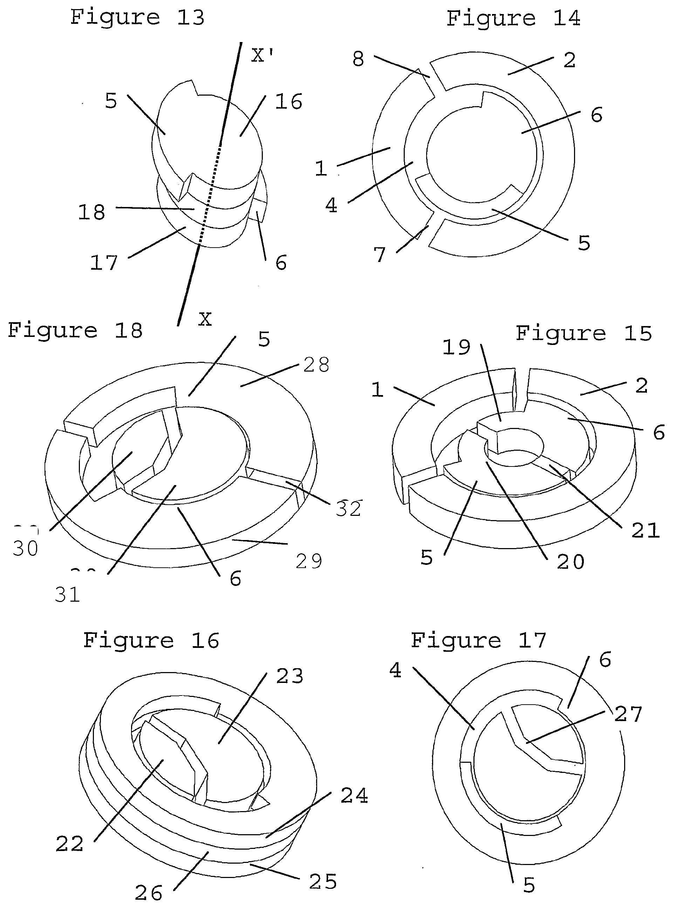

Les figures 13 et 14 représentent une variante du dispositif de l'invention dans laquelle le rotor 16 et 17, disposé à l'intérieur d'un stator 1, 2, est constitué en deux parties 16 et 17, auxquelles sont collés respectivement les pôles magnétiques 5 et 6. Les deux parties du rotor 16, 17, sont par ailleurs séparées par un aimant disque 18 aimanté axialement.

Ainsi, le capteur de position, selon le présent mode de réalisation, comporte un stator 1, 2, à l'intérieur duquel est logé un rotor divisé en deux parties 16 et 17, lesdites parties 16, 17 étant séparées axialement par un aimant disque 18 à aimantation axiale, c'est-à-dire dont la direction d'aimantation est parallèle à l'axe XX' d'empilement des deux parties du rotor 16 et 17 et dudit aimant disque 18. L'espace existant entre le stator 1, 2 et le rotor 16, 17 définit l'entrefer principal 4 qui s'étend sur 360° et dans lequel se déplacent deux pôles magnétiques 5, 6, en matériau ferromagnétique doux de polarités alternées, lesdits pôles magnétiques 5, 6, étant solidaires d'un moyen d'accouplement, pouvant être collés au rotor ou constituer une fraction de chacune des parties du rotor 16 et 17.

Comme dans les autres modes d'exécution du dispositif selon l'invention, le stator est constitué par deux parties fixes 1 et 2, définissant deux entrefers secondaires 7, 8 dont les bords parallèles sont orientés radialement. Les deux entrefers secondaires 7, 8, sont sensiblement perpendiculaires à l'entrefer principal 4 et l'élément magnétosensible 9, logé dans au moins un desdits entrefers secondaires 7, 8, mesure la variation de l'induction. Cet élément magnétosensible 9 engendre un signal électrique proportionnel à l'induction qui le traverse.

Comme cela est représenté sur la figure 15, les deux parties du rotor 19, 20 pourront être disposés sur un même plan, comprenant également le stator 1, 2. Dans cette variante du dispositif de l'invention, les deux parties du rotor 19, 20, comprendront chacune un pôle magnétique, par exemple collé à ladite partie 19 ou 20, et seront séparées entre elles par un aimant parallélépipédique 21 à aimantation transversale, c'est-à-dire suivant le susdit plan et perpendiculairement aux tangentes au cercle, ou portion de cercle, formé par le stator 1, 2 ou les deux parties du rotor 19, 20.

Les autres éléments du dispositif de capteur magnétique de position angulaire selon l'invention peuvent être disposés à l'identique que dans les variantes décrites précédemment. Ainsi, le stator 1, 2 est constitué par deux parties fixes 1 et 2, définissant deux entrefers secondaires 7, 8, dont les bords parallèles sont orientés radialement. Les deux entrefers secondaires 7, 8, sont sensiblement perpendiculaires à l'entrefer principal 4 et l'élément magnétosensible 9, logé dans au moins un desdits entrefers secondaires 7, 8, mesure la variation de l'induction. Cet élément magnétosensible 9 engendre un signal électrique proportionnel à l'induction qui le traverse.

Les figures 16 et 17 présentent une variante du dispositif de l'invention dans laquelle le stator 22, 23 est placé à l'intérieur d'un rotor divisé en deux parties 24 et 25, ces deux parties 24, 25, étant séparées axialement par un aimant annulaire 26 à aimantation axiale, c'est-à-dire dans la direction parallèle à l'empilement des cercles, ou anneaux, formés par les parties du rotor 24, 25, et l'aimant annulaire 26 les séparant. L'espace entre le stator 22, 23, et le rotor 24, 25, définit l'entrefer principal 4 qui s'étend sur 360° et dans lequel se déplacent deux pôles magnétiques 5, 6, en matériau ferromagnétique doux de polarités alternées.

Les pôles magnétiques 5, 6, pourront être solidaires d'un moyen d'accouplement avec les parties du rotor 24, 25, par exemple collés audites parties 24 et 25 ou constituer en une fraction desdites parties du rotor 24, 25. Dans le cas représenté sur les figures 16 et 17, chaque partie du rotor 24 et 25 comprend, ou porte, un pôle magnétique 5 ou 6.

Le stator 22, 23 est ici constitué par deux parties fixes 22 et 23, définissant un entrefer secondaire 27 dont les deux extrémités sont sensiblement perpendiculaires à l'entrefer principal 4. L'élément magnétosensible 9, logé dans l'entrefer secondaire 27, mesure la variation de l'induction. Comme précédemment, cet élément magnétosensible 9 engendre un signal électrique proportionnel à l'induction qui le traverse.

La figure 18 représente, comme dans l'exemple représenté sur la figure 15, les deux parties du rotor 28, 29, disposées sur un même plan, comprenant également le stator 30, 31, disposé à l'intérieur du cercle, ou de l'anneau, formé par les deux parties du rotor 28, 29. Les deux parties du rotor 28, 29, comprennent chacune un pôle magnétique 5, 6, et seront séparées entre elles par un aimant 32, par exemple de forme parallélépipédique, à aimantation transversale, c'est-à-dire suivant le susdit plan et perpendiculairement aux tangentes au cercle, ou portion de cercle, formé par le stator 30, 31, ou les deux parties du rotor 28, 29.

Dans cet exemple, le stator 30, 31, est également constitué par deux parties fixes 30 et 31, définissant un entrefer secondaire dont les deux extrémités sont sensiblement perpendiculaires à l'entrefer principal. L'élément magnétosensible 9, logé dans l'entrefer secondaire, mesure la variation de l'induction de la même manière que dans les autres exemples de réalisation de l'invention.

L'invention est décrite dans ce qui précède à titre d'exemple. Il est entendu que l'homme du métier est à même de réaliser différentes variantes du dispositif d'étanchéité selon l'invention, en particulier concernant la forme du stator et/ou du rotor, de l'entrefer principal et secondaire, sans pour autant sortir du cadre du brevet.

## Revendications

1. Dispositif de capteur magnétique de position angulaire, comportant au moins un stator (1, 2) et un rotor (3), l'espace entre ledit stator (1, 2) et ledit rotor (3) définissant sur sensiblement 360° un entrefer principal (4) dans lequel se déplace au moins deux pôles magnétiques (5, 6) de polarités alternées, ledit stator (1, 2) comportant au moins un entrefer secondaire (7, 8) dans lequel est placé au moins un élément magnétosensible (9), **caractérisé en ce que** ledit stator (1, 2) est constitué de deux épanouissements polaires (1 et 2) de largeurs angulaires respectivement sensiblement égales à 120° et 240°, et **en ce que** les deux pôles magnétiques (5, 6) sont chacun de largeur angulaire sensiblement égale à 120°.

2. Dispositif de capteur magnétique de position angulaire selon la revendication 1, **caractérisé en ce que** le rotor (3) est situé à l'intérieur du stator (1, 2).

3. Dispositif de capteur magnétique de position angulaire selon la revendication 1, **caractérisé en ce que** le rotor (11) est situé à l'extérieur du stator (12, 13).

4. Dispositif de capteur magnétique de position angulaire selon la revendication 1, **caractérisé en ce que** les susdits deux pôles magnétiques (5, 6) sont des aimants adjacents aimantés radialement.

5. Dispositif de capteur magnétique de position angulaire selon la revendication 1, **caractérisé en ce que** les bords de chaque susdit entrefer secondaire (7, 8) sont orientés radialement, également dénommé "en fentes radiales".

6. Dispositif de capteur magnétique de position angulaire selon la revendication 1, **caractérisé en ce qu'**il comporte deux entrefers secondaires (7, 8) présentant des bords correspondants, et **en ce que** les bords correspondants desdits entrefers secondaires (7, 8) sont orientés dans la même direction, également dénommés "en fentes droites".

7. Dispositif de capteur magnétique de position angulaire selon la revendication 5 ou 6, **caractérisé en ce que** les bords de chaque susdit entrefer secondaire (7, 8) sont parallèles entre eux.

8. Dispositif de capteur magnétique de position angulaire selon la revendication 1, **caractérisé en ce qu'**au moins un desdits pôles magnétiques (5, 6) est constitué en un matériau ferromagnétique doux.

9. Dispositif de capteur magnétique de position angulaire selon la revendication 1, **caractérisé en ce que** l'un au moins des pôles magnétiques (5, 6) est collé au rotor (3).

10. Dispositif de capteur magnétique de position angulaire selon la revendication 1, **caractérisé en ce que** l'un au moins des pôles magnétiques (5, 6) est partie intégrante du rotor (3).

11. Dispositif de capteur magnétique de position angulaire selon la revendication 1, **caractérisé en ce que** le rotor (15) et le stator (1, 2) sont disposés axialement, c'est-à-dire suivant un même axe linéaire.

12. Dispositif de capteur magnétique de position angulaire selon la revendication 11, **caractérisé en ce que** les susdits pôles magnétiques (5, 6) sont des aimants adjacents aimantés axialement, c'est-à-dire suivant un même axe linéaire.

13. Dispositif de capteur magnétique de position angulaire selon la revendication 1, **caractérisé en ce que** le rotor (16, 17) comprend au moins deux parties (16 et 17) séparées axialement.

14. Dispositif de capteur magnétique de position angulaire selon la revendication 13, **caractérisé en ce que** les deux parties formant le rotor (16, 17) sont séparées par un aimant à disque (18), à aimantation axiale.

15. Dispositif de capteur magnétique de position angulaire selon la revendication 1, **caractérisé en ce que** le rotor (19, 20) comprend au moins deux parties (19 et 20) séparées transversalement.

16. Dispositif de capteur magnétique de position angulaire selon la revendication 15, **caractérisé en ce que** les deux parties formant le rotor (19, 20) sont séparées par un aimant parallélépipédique (21), à aimantation transversale.

17. Dispositif de capteur magnétique de position angulaire selon la revendication 13, **caractérisé en ce que** les deux parties du rotor (24, 25) sont séparées par un aimant annulaire (26), à aimantation axiale.

18. Dispositif de capteur magnétique de position angulaire selon la revendication 3, **caractérisé en ce que** le rotor (28, 29) comprend au moins deux parties (28 et 29) séparées transversalement par un aimant (32), à aimantation transversale.

19. Dispositif de capteur magnétique de position angulaire selon la revendication 18, **caractérisé en ce que** l'aimant (32) présente une forme parallélépipédique.

## Patentansprüche

1. Winkelposition-Magnetsensorvorrichtung, die mindestens einen Stator (1, 2) und einen Rotor (3) umfasst, wobei der Raum zwischen dem Stator (1, 2) und besagtem Rotor (3) bei im Wesentlichen 360° einen primären Luftspalt (4) abgrenzt, in dem sich mindestens zwei Magnetpole (5, 6) mit wechselnder Polarität bewegen, wobei besagter Stator (1, 2) mindestens einen sekundären Spalt (7, 8) aufweist, in dem sich mindestens ein magnetempfindliches Element (9) befindet, **dadurch gekennzeichnet, dass** besagter Stator (1, 2) aus zwei Polschuhen (1 und 2) mit Winkelbreiten im Wesentlichen gleich jeweils 120° und 140° besteht, und darin, dass die beiden magnetischen Pole (5, 6) jeweils im Wesentlichen eine Winkelbreite von 120° aufweisen.

2. Winkelposition-Magnetsensorvorrichtung nach Anspruch 1, **dadurch gekennzeichnet, dass** sich der Rotor (3) im Innern des Stators (1, 2) befindet.

3. Winkelposition-Magnetsensorvorrichtung nach Anspruch 1, **dadurch gekennzeichnet, dass** sich der Rotor (11) außen am Stator (12, 13) befindet.

4. Winkelposition-Magnetsensorvorrichtung nach Anspruch 1, **dadurch gekennzeichnet, dass** die oben genannten beiden magnetischen Pole (5, 6) nebeneinander liegende, radial magnetisierte Magneten sind.

5. Winkelposition-Magnetsensorvorrichtung nach Anspruch 1, **dadurch gekennzeichnet, dass** die Ränder jedes oben genanten sekundären Luftspalts (7, 8) radial ausgerichtet sind, was auch "radialer Spalt" genannt wird.

6. Winkelposition-Magnetsensorvorrichtung nach Anspruch 1, **dadurch gekennzeichnet, dass** er zwei sekundäre Luftspalte (7, 8) mit entsprechenden Rändern aufweist, und dadurch, dass die entsprechenden Ränder besagter sekundärer Luftspalte (7, 8) in die gleiche Richtung ausgerichtet sind, was auch "gerade geschlitzt" genannt wird.

7. Winkelposition-Magnetsensorvorrichtung nach Anspruch 5 oder 6, **dadurch gekennzeichnet, dass** die Ränder besagter sekundärer Luftspalte (7, 8) parallel zueinander stehen.

8. Winkelposition-Magnetsensorvorrichtung nach Anspruch 1, **dadurch gekennzeichnet, dass** mindestens einer der besagten magnetischen Pole (5, 6) aus einem weichen ferromagnetischen Material besteht.

9. Winkelposition-Magnetsensorvorrichtung nach Anspruch 1, **dadurch gekennzeichnet, dass** mindestens einer der magnetischen Pole (5, 6) am Rotor (3) klebt.

10. Winkelposition-Magnetsensorvorrichtung nach Anspruch 1, **dadurch gekennzeichnet, dass** mindestens einer der magnetischen Pole (5, 6) Bestandteil des Rotors (3) ist.

11. Winkelposition-Magnetsensorvorrichtung nach Anspruch 1, **dadurch gekennzeichnet, dass** der Rotor (15) und der Stator (1, 2) axial, das heisst, auf ein und derselben linearen Achse angeordnet sind.

12. Winkelposition-Magnetsensorvorrichtung nach Anspruch 11, **dadurch gekennzeichnet, dass** besagte magnetische Pole (5, 6) nebeneinander liegende, axial magnetisierte, das heißt auf ein und derselben linearen Achse befindliche Magneten sind.

13. Winkelposition-Magnetsensorvorrichtung nach Anspruch 1, **dadurch gekennzeichnet, dass** der Rotor (16, 17) mindestens zwei Teile (16 und 17) umfasst, die axial voneinander getrennt sind.

14. Winkelposition-Magnetsensorvorrichtung nach Anspruch 13, **dadurch gekennzeichnet, dass** die beiden, den Rotor (16, 17) bildenden Teile, durch einen Scheibenmagneten (18) mit axialer Magnetisierung getrennt sind.

15. Winkelposition-Magnetsensorvorrichtung nach Anspruch 1, **dadurch gekennzeichnet, dass** der Rotor (19, 20) mindestens zwei Teile (19 und 20) umfasst, die quer voneinander getrennt sind.

16. Winkelposition-Magnetsensorvorrichtung nach Anspruch 15, **dadurch gekennzeichnet, dass** die beiden Teile, die den Rotor (19, 20) bilden, durch einen quaderförmigen Magneten (21) mit Quermagnetisierung voneinander getrennt sind.

17. Winkelposition-Magnetsensorvorrichtung nach Anspruch 13, **dadurch gekennzeichnet, dass** die beiden Partien des Rotors (24, 25) durch einen winkelförmigen Magneten (26) mit axialer Magnetisierung voneinander getrennt sind.

18. Winkelposition-Magnetsensorvorrichtung nach Anspruch 3, **dadurch gekennzeichnet, dass** der Rotor (28, 29) mindestens zwei Teile (28 und 29) umfasst, die quer durch einen Magneten (32) mit Quermagnetisierung getrennt sind.

19. Winkelposition-Magnetsensorvorrichtung nach Anspruch 18, **dadurch gekennzeichnet, dass** der Magnet (32) quaderförmig ist.

## Claims

1. An angular position magnetic sensor device, comprising at least one stator (1, 2) and one rotor (3), with the space between said stator (1, 2) and said rotor (3) defining, on substantially 360°, a primary air gap (4) wherein at least two magnetic poles (5, 6) having alternating polarities move, with said stator (1, 2) comprising at least one secondary air gap (7, 8) wherein at least one magneto-sensitive element (9) is placed, **characterized in that** said stator (1, 2) consists of two pole shoes (1, 2) having angular widths substantially equal to 120° and 240° respectively, and **in that** the two magnetic poles (5, 6) each have an angular width substantially equal to 120°.

2. An angular position magnetic sensor device according to claim 1, **characterized in that** the rotor (3) is located inside the stator (1, 2).

3. An angular position magnetic sensor device according to claim 1, **characterized in that** the rotor (11) is located outside the stator (12, 13).

4. An angular position magnetic sensor device according to claim 1, **characterized in that** the above-mentioned two magnetic poles (5, 6) are adjacent radially magnetized magnets.

5. An angular position magnetic sensor device according to claim 1, **characterized in that** the edges of each above-mentioned secondary air gap (7, 8) are oriented radially, also referred to "as radial slots".

6. An angular position magnetic sensor device according to claim 1, **characterized in that** it comprises two secondary air gaps (7, 8) having matching edges, and **in that** the matching edges of said secondary air gap (7, 8) are oriented in the same direction, also referred to "as straight slots".

7. An angular position magnetic sensor device according to claim 5 or 6, **characterized in that** the edges of each above-mentioned secondary air gap (7, 8) are mutually parallel.

8. An angular position magnetic sensor device according to claim 1, **characterized in that** at least one of said magnetic poles (5, 6) consists of a soft ferromagnetic material.

9. An angular position magnetic sensor device according to claim 1, **characterized in that** at least one of the magnetic poles (5, 6) is glued to the rotor (3).

10. An angular position magnetic sensor device according to claim 1, **characterized in that** at least one of the magnetic poles (5, 6) is an integral part of the rotor (3).

11. An angular position magnetic sensor device according to claim 1, **characterized in that** the rotor (15) and the stator (1, 2) are arranged axially, i.e. along the same linear axis.

12. An angular position magnetic sensor device according to claim 11, **characterized in that** the above-mentioned magnetic poles (5, 6) are adjacent magnets magnetized axially, i.e. along the same linear axis.

13. An angular position magnetic sensor device according to claim 1, **characterized in that** the rotor (16, 17) comprises at least two axially separated parts (16, 17).

14. An angular position magnetic sensor device according to claim 13, **characterized in that** the two parts forming the rotor (16, 17) are separated by an axially magnetized disc magnet (18).

15. An angular position magnetic sensor device according to claim 1, **characterized in that** the rotor (19, 20) comprises at least two transversely separated parts (19 and 20).

16. An angular position magnetic sensor device according to claim 15, **characterized in that** the two parts forming the rotor (19, 20) are separated by a transversely magnetized parallelepiped magnet (21).

17. An angular position magnetic sensor device according to claim 13, **characterized in that** the two rotor parts (24, 25) are separated by an axially magnetized annular magnet (26).

18. An angular position magnetic sensor device according to claim 3, **characterized in that** the rotor (28, 29) comprises at least two parts (28 and 29) transversely separated by a transversely magnetized magnet (32).

19. An angular position magnetic sensor device according to claim 18, **characterized in that** the magnet (32) has a parallelepiped shape.
